# EUROPÄISCHE PATENTANMELDUNG

(11) **EP 2 833 080 A1**
(43) Veröffentlichungstag der Anmeldung: **04.02.2015**
(21) Anmeldenummer: 13003764.1
(22) Anmeldetag: 29.07.2013
(51) Int. Cl.: F24F 13/28, A47L 9/20, B01D 46/00, B61C 5/02, B61C 17/04, B60H 3/06, F24F 3/16, H02K 9/02, F01P 1/06

(54) **Lüftungseinlassmodul, Lüftungsvorrichtung und Verfahren zum Betreiben einer Lüftungsvorrichtung**

(71) Anmelder: ABB Technology AG, 8050 Zürich (CH)
(72) Erfinder: Harling, Oliver, 28876 Oyten (DE)
(74) Vertreter: Kock, Ina

(57) **Zusammenfassung**

Die Erfindung betrifft ein Lüftungseinlassmodul (10), umfassend ein durchströmbares kastenähnliches Filtermodul (12, 32) mit einer Einlass- und einer Auslassöffnung sowie einen darum umlaufenden Rahmen (14, 36, 72), wobei das Filtermodul (12, 32) luftdicht und beweglich (16, 42) mit dem umlaufenden Rahmen (14, 36, 72) verbunden ist. Es ist eine Vibrationsvorrichtung (18, 44, 78) vorgesehen, um eine ruckartige Bewegung des Filtermoduls (12, 32) gegenüber dem umlaufenden Rahmen (14, 36, 72) zu bewirken, so dass eventuell im Filtermodul (12, 32) befindliche Schmutzpartikel herausfallen. Die Erfindung betrifft auch eine Lüftungsvorrichtung (30, 70) mit erfindungsgemäßem Lüftungseinlassmodul (10) sowie ein Verfahren zum Reinigen einer Lüftungsvorrichtung (30, 70).

## Beschreibung

Die Erfindung betrifft ein Lüftungseinlassmodul, umfassend ein durchströmbares kastenähnliches Filtermodul mit einer Einlass- und einer Auslassöffnung sowie einen darum umlaufenden Rahmen. Die Erfindung betrifft auch eine Lüftungsvorrichtung und ein Verfahren zur Reinigung einer erfindungsgemäßen Lüftungsvorrichtung.

Es ist allgemein bekannt, dass Filtermodule wie Lüftungsgitter oder Lüftungsgittermatten mit verschiedenen Öffnungsdurchmessern beziehungsweise Maschenbreiten häufig dort Anwendung finden, wo ein Schutz vor Verschmutzung dahinter liegender zu kühlender Komponenten beziehungsweise aber auch ein Berührungsschutz erforderlich ist. Dies ist beispielsweise bei elektrischen Anlagen wie Installationsschränken oder gekapselten Hochspannungstransformatoren der Fall, letzteres insbesondere auch bei einer Unterfluranordnung eines Transformators oder einer Drossel für Traktionsfahrzeuge in der Bahntechnik. Filtermodule sind zumeist mit einem Rahmen beispielsweise eines Lüftungsgehäuses verbunden, so dass sie sich einfach austauschen lassen. Eine Einheit von Filtermodul mit einem darum umlaufenden Rahmen wird im Weiteren auch als Lüftungseinlassmodul bezeichnet.

Je nach filtertechnischen Anforderungen müssen Filtermodule wie Lüftungsgitter beziehungsweise Lüftungsgittermatten sehr kleine Öffnungsdurchmesser beziehungsweise sehr kleine Maschenbreiten aufweisen um eine Schutzfunktion gegen Schmutzpartikel wie beispielsweise Staub oder Dreck zu bewirken.

Aufgrund der dann benötigten Engmaschigkeit derartiger Filtermodule setzen diese sich im Lauf von deren Betriebszeit typischerweise mit Partikeln von Staub, Schmutz oder Dreck zu, so dass ein zu filterndes Kühlmedium nicht mehr uneingeschränkt durch das Filtermodul strömen kann und aufgrund der reduzierten Luftzufuhr eine geringere Kühlwirkung vorliegt beziehungsweise im Extremfall eine Kühlung völlig zum Erliegen kommt. Eine entsprechende manuelle Reinigung von Filtermodulen ist auf der einen Seite zeitaufwändig und bedeutet auf der anderen Seite eine Ausfallzeit für die zu kühlende Komponente, was im Falle eines Transformators eines Bahnfahrzeuges dessen zeitweisen kompletten Ausfall bedeutet.

Ausgehend von diesem Stand der Technik ist es Aufgabe der Erfindung, ein Lüftungseinlassmodul bereitzustellen, dessen Filtermodul besonders einfach zu reinigen ist. Aufgabe der Erfindung ist auch die Bereitstellung einer entsprechenden Lüftungsvorrichtung und die Angabe eines Verfahrens zu deren Reinigung.

Die Aufgabe wird gelöst durch ein Lüftungseinlassmodul der eingangs genannten Art. Dieses ist dadurch gekennzeichnet, dass das Filtermodul luftdicht und beweglich mit dem umlaufenden Rahmen verbunden ist und dass eine Vibrationsvorrichtung vorgesehen ist, um eine ruckartige Bewegung des Filtermoduls gegenüber dem umlaufenden Rahmen zu bewirken, so dass eventuell im Filtermodul befindliche Schmutzpartikel herausfallen. Ebenso wie Schmutzpartikel lassen sich erfindungsgemäß aber auch eventuelle Vereisungen entfernen.

Die Grundidee der Erfindung besteht darin, das Filtermodul gegenüber dem Rahmen beweglich auszugestalten, wobei jedoch eine zumindest annährende Dichtigkeit der beweglichen Rahmenverbindung gegenüber durch das Filtermodul einströmendes Kühlmedium gegeben ist. Somit ist sichergestellt, dass einströmendes Kühlmedium nicht ungefiltert an dem Filtermodul vorbeiströmen kann. Eine erfindungsgemäße Vibrationsvorrichtung ist dafür vorgesehen, das beweglich angeordnete Filtermodul in ruckartige Bewegungen oder Schwingungen zu versetzen, so dass sich Schmutzpartikel, welche sich auf oder in dem Filtermodul abgesetzt haben von beispielsweise vorhandenen Filtermatten lösen und schwerkraftbedingt nach unten fallen. Hierbei kann es sich als sinnvoll erweisen, das Filtermodul schräg anzuordnen, beispielsweise in einem Winkel von größer als 20° zu einer Senkrechten, so dass abfallende Schmutzpartikel ungehindert aus dem abgeschrägten Bereich fallen, ohne eine erneute Verschmutzung im Filtermodul zu verursachen.

Eine erfindungsgemäße Vibrationsvorrichtung ist derart zu dimensionieren, dass sie das gesamte - vorzugsweise recht starre - Filtermodul in eine entsprechende Vibration versetzen kann beziehungsweise eine ruckartige Bewegung hierauf übertragen kann. Vibrationsfrequenzen können sowohl niederfrequent sein, beispielsweise im Bereich von einigen wenigen 100 Hz, wobei dann die Amplitude einer Schwingung entsprechend höher sein sollte, beispielsweise 1 mm, es sind jedoch auch deutlich höherfrequente Schwingungen mit entsprechend geringerer Amplitude möglich. Bevorzugt kann auch eine Vibration mit einer Frequenz erzeugt werden, welche im Bereich der Eigenresonanzfrequenz eines jeweiligen Filtermoduls liegt - hierdurch wird eine besonders gute Ablösung von Schmutzpartikeln erreicht.

Gemäß einer besonders bevorzugten Ausgestaltungsform des erfindungsgemäßen Lüftungseinlassmodules ist das kastenähnliche Filtermodul zumindest teilweise durch eine hüllenartige starre Gitterstruktur gebildet, in deren Innerem eine Filtermatte oder sonstige Filterelemente angeordnet sind. Wesentlich für die Übertragung der ruckartigen Bewegungen vorzugsweise über das gesamte kastenähnliche Filtermodul ist, dass dieses eine gewisse Steifigkeit aufweist. Diese kann sowohl durch eine hüllenartige Gitterstruktur gebildet sein, in welcher jeweilige Filtermatten angeordnet sind, beispielsweise ein sehr engmaschiges Geflecht. Aber auch Filtermatten selbst können bereits eine hinreichend steife Struktur aufweisen. Bei loser Anordnung mehrerer Filtermatten in einer hüllenartigen Gitterstruktur können diese sich gegeneinander bewegen, womit ein Reinigungseffekt noch verstärkt wird.

Gemäß einer besonders bevorzugten Ausgestaltungsform des erfindungsgemäßen Lüftungseinlassmoduls ist der umlaufende Rahmen Teil eines Lüftungsgehäuses, beispielsweise auch in Form einer rechteckigen Aussparung. Hierdurch wird der Ein- und Ausbau eines Filtermodules in vorteilhafter Weise vereinfacht. Zudem ist ein Luftstrom in das Lüftungsgehäuse letztendlich nur über das Filtermodul möglich, womit Schmutzpartikel in vorteilhafter Weise von dessen Inneren ferngehalten sind.

Einer weiteren Ausgestaltungsvariante des erfindungsgemäßen Lüftungseinlassmoduls folgend sind das kastenähnliche Filtermodul und der umlaufende Rahmen mittels einer Gummidichtung miteinander verbunden. Eine Gummidichtung ermöglicht in vorteilhafter Weise eine Beweglichkeit zwischen Filtermodul und umlaufenden Rahmen und dichtet diese beiden Komponenten zudem gegeneinander ab.

In einer alternativen Ausgestaltungsvariante des erfindungsgemäßen Lüftungseinlassmoduls sind das kastenähnliche Filtermodul und der umlaufende Rahmen längs einer gemeinsamen Gleitfläche miteinander verbunden. Auch eine gemeinsame Gleitfläche ermöglicht eine Bewegung des Filtermoduls gegenüber einem umlaufenden Rahmen, wobei die beiden Komponenten zumindest derart gegeneinander abgedichtet sind, dass ein Eintritt von Schmutz oder Staubpartikeln in den Innenraum eines Lüftungsgehäuses weitgehend ausgeschlossen ist.

Gemäß einer besonders bevorzugten Ausgestaltungsvariante des erfindungsgemäßen Lüftungseinlassmoduls ist die Vibrationsvorrichtung ein Vibrationsmotor. Mit diesem lassen sich in vorteilhafter Weise auch zeitlich längere Vibrationen erzeugen. Ein Vibrationsmotor treibt zumeist eine Rotationsmasse mit einer Unwucht an, so dass hierbei entsprechende Schwingungen entstehen, die dann erfindungsgemäß auf das Filtermodul übertragen werden. Durch die zeitliche Steuerung der Einwirkung der Schwingungen auf das Filtermodul lässt sich ein Reinigungseffekt sehr gut an den Grad einer Verschmutzung anpassen.

Alternativ lässt sich eine Vibrationsvorrichtung aber auch als ein elektromagnetischer Stößel ausführen. Hierbei wird die Masse eines Stößels beispielsweise durch einen Elektromagneten beschleunigt wobei ein Ende des beschleunigten Stößels dann auf beispielsweise ein Rahmenelement des Filtermoduls trifft. Dies lässt sich beliebig oft wiederholen bis der gewünschte Reinigungseffekt erreicht ist. Beim Auftreffen des Stößels auf das Filtermodul wird ein besonders starker Ruck erzeugt, welcher einen entsprechend guten Reinigungseffekt zur Folge hat.

Gemäß einer besonders bevorzugten Ausführungsform des erfindungsgemäßen Lüftungseinlassmoduls ist der Bewegungsspielraum des kastenähnlichen Filtermoduls zum umlaufenden Rahmen zumindest in einer Bewegungsrichtung durch einen Anschlag begrenzt. Hierdurch wird bei einem Aufprall des Filtermoduls auf den Anschlag ein weiterer Ruck erzeugt. Erfindungsgemäß kann das Filtermodul auch durch umlaufende und tangential ausgerichtete Federelemente in einer mittigen Position gehalten sein, wobei es dann bei Einwirken eines Stoßes aus dieser Position gegen einen Anschlag bewegt wird wo dann ein weiterer eine Reinigung begünstigender Stoß erfolgt. Durch die Federelemente erfolgt eine automatische Rückführung in die mittige Position.

Die erfindungsgemäße Aufgabe wird auch gelöst durch eine Lüftungsvorrichtung, umfassend ein Lüftungsgehäuse, ein damit verbundenes erfindungsgemäßes Lüftungseinlassmodul sowie ein Gebläse, wobei das Gebläse derart in dem Lüftungsgehäuse angeordnet ist, das damit durch die Einlassöffnung des Filtermoduls Umgebungsluft in das Lüftungsgehäuse einsaugbar ist. Durch die Verwendung eines erfindungsgemäßen Filtermoduls ist eine Reinigung der Lüftungsvorrichtung besonders einfach, wie bereits zuvor erwähnt wurde.

Gemäß einer weiteren Ausgestaltungsvariante der erfindungsgemäßen Lüftungsvorrichtung umfasst diese weiterhin einen im Lüftungsgehäuse oder strömungstechnisch damit verbundenen weiteren Gehäuse angeordneten Hochspannungstransformator, welcher durch eingesaugte Umgebungsluft kühlbar ist. Durch die Kühlung des Hochspannungstransformators mit gefilterter Luft und dessen gekapselte Anordnung ist somit Schmutz von diesem weitgehend ferngehalten, so dass dessen Ausfallwahrscheinlichkeit deutlich reduziert ist.

Gemäß einer besonders bevorzugten Ausführungsvariante der erfindungsgemäßen Lüftungsvorrichtung ist diese im Unterflurbereich eines Schienenfahrzeugs angeordnet. Insbesondere dort angeordnete elektrische Komponenten wie beispielsweise Hochspannungstransformatoren oder Drosseln sind einer erhöhten Belastung mit Schmutzpartikeln ausgesetzt, sofern nicht entsprechende Filter vorgesehen sind. Aufgrund der erfindungsgemäß vorgesehenen automatischen Reinigungsfähigkeit des zum Einsatz kommenden Lufteinlassmoduls ist eine häufige manuelle Reinigung in vorteilhafter Weise vermieden. Bei Schienenfahrzeugen bietet sich eine erfindungsgemäße Reinigung beim Stillstand des Fahrzeuges an, beispielsweise vor einem roten Signal oder in einem Bahnhof.

Ebenso bevorzugte Einsatzgebiete liegen aber auch bei Militärfahrzeugen oder Minenfahrzeugen im Berg- und Tagebau (Bagger, LKWs, Radlader, etc.), die in sehr stark staub- und schmutzbelasteter Umgebung operieren müssen, wobei in diesen Fällen Verbrennungsmotoren zu kühlen sind.

Ein Verfahren zum Betreiben einer erfindungsgemäßen Lüftungsvorrichtung umfasst folgende Schritte:
- Aktivieren des Gebläses zum Betrieb der Lüftungsvorrichtung,
- Herunterregeln oder Deaktivieren des Gebläses, ggf. auch kurzzeitiger Umkehrbetrieb des Gebläses
- Aktivieren der Vibrationsvorrichtung, so dass eine mehrfache ruckartige Bewegung des Filtermoduls bewirkt ist und eventuell im Filtermodul befindliche Schmutzpartikel herausfallen,
- Hochregeln oder erneutes Aktivieren des Gebläses.

Im normalen Kühlbetrieb ist das Gebläse zu aktivieren, um eine gewünschte Kühlwirkung zu erreichen. Um in einen Reinigungsmodus zu gelangen, ist das Gebläse dann herunter zu regeln beziehungsweise zu deaktivieren, um ein Hereintreten beziehungsweise Hereinsaugen von im Reinigungsbetrieb gelösten Schmutzpartikel in das Lüftungsgehäuse zu vermeiden. Nach erfolgter Reinigung ist das Gebläse dann erfindungsgemäß wieder auf eine für die Kühlzwecke erforderliche Leistung hoch zu regeln.

Weitere vorteilhafte Ausgestaltungsmöglichkeiten sind den weiteren abhängigen Ansprüchen zu entnehmen.

Anhand der in den Zeichnungen dargestellten Ausführungsbeispiele sollen die Erfindung, weitere Ausführungsformen und weitere Vorteile näher beschrieben werden.

Es zeigen:
- Fig. 1: ein exemplarisches Lüftungseinlassmodul,
- Fig. 2: eine erste exemplarische Lüftungsvorrichtung sowie
- Fig. 3: eine zweite exemplarische Lüftungsvorrichtung.

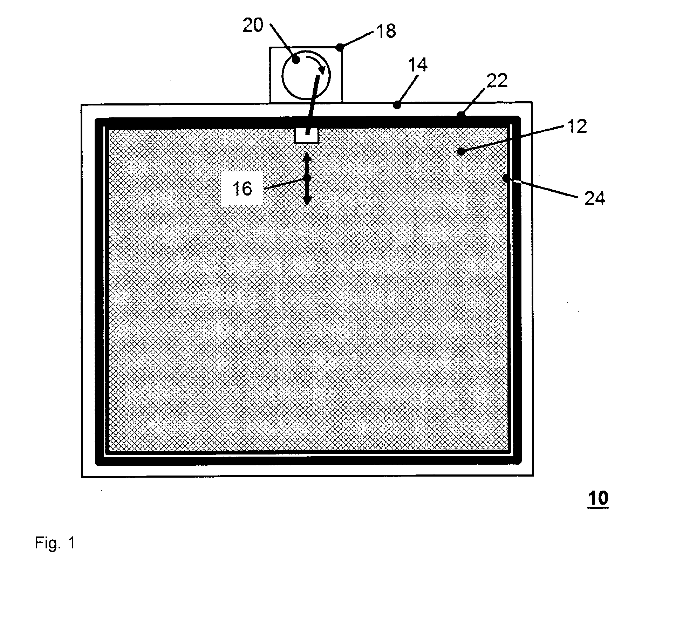

Figur 1 zeigt ein exemplarisches Lüftungseinlassmodul 10 in einer schematischen Zeichnung. Ein kastenähnliches Filtermodul 12 ist in einer hüllenartigen Gitterstruktur 24 angeordnet und mit dieser steif verbunden. Um die kastenähnliche Gitterstruktur 24 herum ist ein umlaufender Rahmen 14 angeordnet, welcher beispielsweise aus Edelstahl gefertigt ist, wobei beide Komponenten beweglich zueinander luftdicht mittels einer ebenfalls umlaufenden Gummidichtung 22 miteinander verbunden sind.

Im oberen Bereich des umlaufenden Rahmens 14 ist eine Vibrationsvorrichtung 18 vorgesehen, welche einen Motor mit einem Rotationskörper 20 aufweist, der über eine exzentrisch verbundene Pleuelstange im Betrieb eine Vibration auf den umlaufenden Rahmen 24 beziehungsweise das kastenähnliche Filtermodul 12 überträgt, wie mit dem Pfeil mit der Bezugsziffer 16 angedeutet.

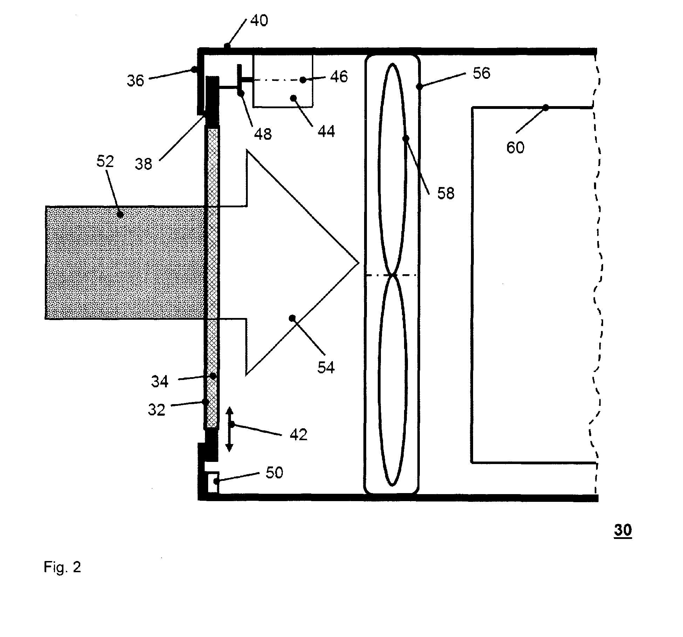

Figur 2 zeigt eine erste exemplarische Lüftungsvorrichtung 30 in einer Schnittansicht. In einem kastenähnlichen Filtermodul ist ein Filterelement 34 angeordnet, beispielsweise ein mehrlagiges sehr engmaschiges Gitternetz. Das Filtermodul weist eine umlaufende glatte Fläche auf, welche gegenüber der Innenfläche eines umlaufenden Rahmens 36 längs einer gemeinsamen Gleitfläche 38 in Pfeilrichtung 42 verschiebbar ist, wobei gleichzeitig eine Dichtwirkung erreicht ist. Der umlaufende Rahmen 36 ist Teil eines Lüftungsgehäuses 40, welches in seinem Inneren eine Gebläse 56 mit Rotorblättern 58 zum Einsaugen von Kühlluft durch das Filterelement 34 sowie einen zu kühlenden Hochspannungstransformator 60 aufweist. Wie mit dem schraffierten Pfeilbereich 54 angedeutet wird mit Schmutzpartikeln belastete Luft von außen an das Filterelement 34 angesaugt und dort gefiltert, wobei die gefilterte Luft wie mit dem Pfeilbereich 54 angedeutet ist in das Innere des Lüftungsgehäuses 40 eintritt.

Während der Filterung der eingesaugten Luft 52 sammeln sich Schmutzpartikel am beziehungsweise im Filterelement 34 ab. Um einer Verstopfung des Filterelementes 34 vorzubeugen ist im oberen Bereich des Lüftungsgehäuses 40 eine Vibrationsvorrichtung 44 vorgesehen, mittels welcher über einen um eine Rotationsachse 46 drehbaren Rotationskörper 48 eine Vibrationsbewegung auf das Filterelement 34 übertragbar ist, so dass damit Schmutzpartikel herausgelöst werden. Um die Amplitude einer Vibration zu begrenzen, ist im unteren Bereich des Lüftungsgehäuses 40 ein Anschlag 50 beziehungsweise ein Anschlagsbolzen vorgesehen, welcher beispielsweise aus Hartgummi gefertigt ist.

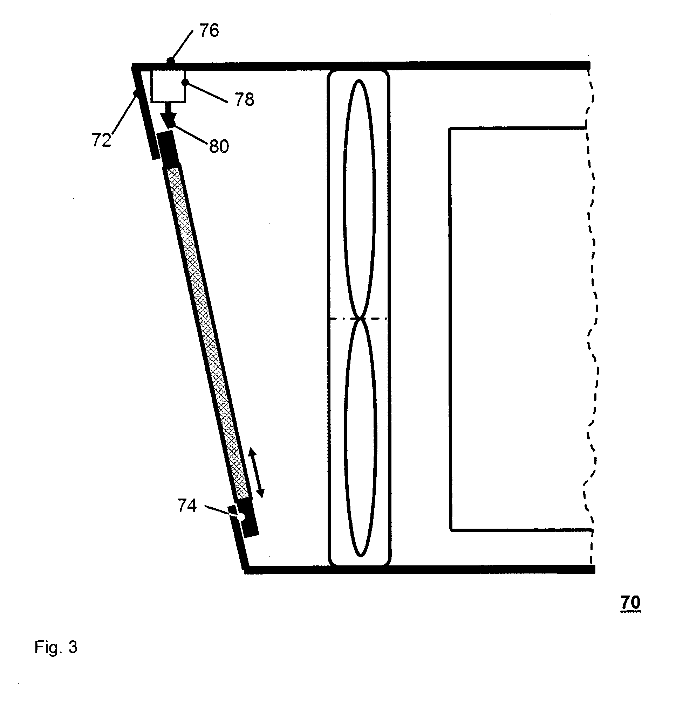

Figur 3 zeigt eine zweite exemplarische Lüftungsvorrichtung 70 in einer Schnittansicht. Sie entspricht im Wesentlichen der in Figur 2 gezeigten Lüftungsvorrichtung, wobei das Filterelement hier in einem Winkel, beispielsweise 20° zu einer Senkrechten, angeordnet ist. Dies hat den Vorteil, dass während eines Reinigungsvorgangs aus dem Filterelement fallende Schmutzpartikel schwerkraftbedingt nach unten fallen ohne eine erneute Verschmutzung zu verursachen. Auch bei der hier gezeigten schrägen Anordnung sind Filterelement und ein zu einem Lüftungsgehäuse 76 gehöriger Rahmen 72 längs einer Gleitfläche 74 beweglich miteinander verbunden. Eine Übertragung eines Stoßes auf das Filterelement erfolgt mittels einer Vibrationsvorrichtung 78, welche einen elektromagnetisch bewegbaren Stößel 80 aufweist.

### Bezugszeichenliste

- 10: exemplarisches Lüftungseinlassmodul
- 12: kastenähnliches Filtermodul
- 14: Rahmen
- 16: Bewegungsrichtung
- 18: Vibrationsvorrichtung
- 20: Rotationskörper
- 22: Gummidichtung
- 24: hüllenartige Gitterstruktur
- 30: erste exemplarische Lüftungsvorrichtung
- 32: kastenähnliches Filtermodul
- 34: Filterelement
- 36: Rahmen
- 38: gemeinsame Gleitfläche
- 40: Lüftungsgehäuse
- 42: Bewegungsrichtung
- 44: Vibrationsvorrichtung
- 46: Rotationsachse
- 48: Rotationskörper
- 50: Anschlag
- 52: ungefilterter Luftstrom
- 54: gefilterter Luftstrom
- 56: Gebläse
- 58: Rotorblatt von Gebläse
- 60: Hochspannungstransformator
- 70: zweite exemplarische Lüftungsvorrichtung
- 72: Rahmen
- 74: gemeinsame Gleitfläche
- 76: Lüftungsgehäuse
- 78: Vibrationsvorrichtung
- 80: Stößel

## Patentansprüche

1. Lüftungseinlassmodul (10), umfassend ein durchströmbares kastenähnliches Filtermodul (12, 32) mit einer Einlass- und einer Auslassöffnung sowie einen darum umlaufenden Rahmen (14, 36, 72),
**dadurch gekennzeichnet,**
**dass** das Filtermodul (12, 32) luftdicht und beweglich (16, 42) mit dem umlaufenden Rahmen (14, 36, 72) verbunden ist und dass eine Vibrationsvorrichtung (18, 44, 78) vorgesehen ist, um eine ruckartige Bewegung des Filtermoduls (12, 32) gegenüber dem umlaufenden Rahmen (14, 36, 72) zu bewirken, so dass eventuell im Filtermodul (12, 32) befindliche Schmutzpartikel herausfallen.

2. Lüftungseinlassmodul nach Anspruch 1, **dadurch gekennzeichnet, dass** das kastenähnliche Filtermodul (12, 32) zumindest teilweise durch eine hüllenartige starre Gitterstruktur (24) gebildet ist, in deren Innerem eine Filtermatte oder sonstige Filterelemente (34) angeordnet sind.

3. Lüftungseinlassmodul nach einem der Ansprüche 1 oder 2, **dadurch gekennzeichnet, dass** der umlaufende Rahmen (14, 36, 72) Teil eines Lüftungsgehäuses (40, 76) ist.

4. Lüftungseinlassmodul nach einem der vorherigen Ansprüche, **dadurch gekennzeichnet, dass** das kastenähnliche Filtermodul (12, 32) und der umlaufende Rahmen (14, 36, 72) mittels einer Gummidichtung (22) miteinander verbunden sind.

5. Lüftungseinlassmodul nach einem der Ansprüche 1 bis 3, **dadurch gekennzeichnet, dass** das kastenähnliche Filtermodul (12, 32) und der umlaufende Rahmen (14, 36, 72) längs einer gemeinsamen Gleitfläche (38, 74) miteinander verbunden sind.

6. Lüftungseinlassmodul nach einem der vorherigen Ansprüche, **dadurch gekennzeichnet, dass** die Vibrationsvorrichtung (18, 44, 78) ein Vibrationsmotor ist.

7. Lüftungseinlassmodul nach einem der Ansprüche 1 bis 5, **dadurch gekennzeichnet, dass** die Vibrationsvorrichtung (18, 44, 78) ein elektromagnetischer Stößel ist.

8. Lüftungseinlassmodul nach einem der vorherigen Ansprüche, **dadurch gekennzeichnet, dass** der Bewegungsspielraum des kastenähnlichen Filtermoduls (12, 32) zum umlaufenden Rahmen (14, 36, 72) zumindest in einer Bewegungsrichtung durch einen Anschlag (50) begrenzt ist.

9. Lüftungsvorrichtung (30, 70), umfassend ein Lüftungsgehäuse (40, 76), ein damit verbundenes Lüftungseinlassmodul (10) nach einem der Ansprüche 1 bis 8 sowie ein Gebläse (56), wobei das Gebläse (56) derart in dem Lüftungsgehäuse (40, 76) angeordnet ist, das damit durch die Einlassöffnung des Filtermoduls (12, 32) Umgebungsluft in das Lüftungsgehäuse (40, 76) einsaugbar ist.

10. Lüftungsvorrichtung nach Anspruch 9, **dadurch gekennzeichnet, dass** diese weiterhin einen im Lüftungsgehäuse (40, 76) oder strömungstechnisch damit verbundenen weiteren Gehäuse angeordneten Hochspannungstransformator (60) umfasst, welcher durch eingesaugte Umgebungsluft kühlbar ist.

11. Lüftungsvorrichtung nach Anspruch 10, **dadurch gekennzeichnet, dass** diese im Unterflurbereich eines Schienenfahrzeugs angeordnet ist.

12. Verfahren zum Reinigen einer Lüftungsvorrichtung nach Anspruch 9 bis 11, **gekennzeichnet durch** folgende Schritte:
• Aktivieren des Gebläses (56) zum Betrieb der Lüftungsvorrichtung,
• Herunterregeln oder Deaktivieren des Gebläses (56), ggf. auch kurzzeitiger Umkehrbetrieb des Gebläses
• Aktivieren der Vibrationsvorrichtung (18, 44, 78), so dass eine mehrfache ruckartige Bewegung (16, 42) des Filtermoduls (12, 32) bewirkt ist und eventuell im Filtermodul (12, 32) befindliche Schmutzpartikel herausfallen,
• Hochregeln oder erneutes Aktivieren des Gebläses (56).
